# EUROPEAN PATENT SPECIFICATION

(11) **EP 1 555 163 B1**
(45) Date of publication and mention of the grant of the patent: **18.07.2007**
(21) Application number: 04011198.1
(22) Date of filing: 11.05.2004
(51) Int. Cl.: B60R 19/48, F16B 9/02

(54) **Unit for sensing obstacles in the vicinity of a vehicle**
Vorrichtung zur Erkennung von Hindernissen in der Umgebung eines Fahrzeugs
Unité pour détecter la présence d'obstacles au voisinage d' un véhicules

(30) Priority: 13.01.2004 IT MO20040005
(43) Date of publication of application: 20.07.2005
(73) Proprietor: Meta System S.p.A., 42100 Reggio Emilia (IT)
(72) Inventor: Simonazzi, Guiseppe, 42100 Reggio Emilia (IT)
(74) Representative: Feltrinelli, Secondo Andrea

(56) References cited:
- EP-A- 1 083 099
- DE-A- 10 203 387
- US-B1- 6 203 366

## Description

The present invention relates to a unit for sensing obstacles in the vicinity of vehicles.

It is known that many vehicles can be equipped with safety, alarm or control instruments that are suitable to indicate the distance of said vehicle from external objects located in the vicinity, allowing the driver to maneuver safely without the danger of collisions or impacts even in low-visibility conditions.

Traditionally, these instruments are provided with sensing devices, such as for example transducers, microcameras or the like, which are capable of sensing obstacles that are present in their vicinity and of then sending an electronic signal, over conducting cables, to a processing unit, such as for example conventional electronic control units for cars.

These devices are commonly applied to cars at their bumpers, which are more exposed to the risk of collision with external objects: in particular, the sensing devices are arranged on conveniently shaped supports, such as brackets, lugs or the like, which are permanently or detachably connected to the internal surface of the bumper.

Traditionally, devices fitted on such supports have a surface that is adapted to locate the obstacles, which is oriented outward, for example through an opening formed in the bumper, and a port for connection to the processing unit and/or to a power supply, which instead is directed toward the inside of the vehicle so that it can be accessed by the operator who performs its electrical connection.

Fitting the sensing devices to the bumper, in particular, provides for a first operation to apply said devices to the supports and then a second wiring operation, by means of which each connection port is placed in contact with the conducting cables.

These conventional devices are not free from drawbacks, including the fact that said assembly step is rather complicated, since it requires many repetitive operations that require significant execution times.

It is noted in this regard that safety, alarm or control instruments, in order to be particularly efficient and functional, may provide for the presence of many sensing devices, each of which has to be fitted on the corresponding support and then connected electrically.

Moreover, it is noted that vehicle manufacturers increasingly rely on subcontractors to provide the components, and merely perform assembly in their factories; accordingly, such assembly becomes particularly important, since if it is not sufficiently quick and economical it may penalize said manufacturers considerably.

Among the solutions actually known, it is mentioned that disclosed by patent document DE 102 03 387 A, which concerns an ultrasonic obstacle detector suitable for being fixed to a bumper or a similar part of a vehicle.

However this obstacle detector shows a single piece or monolithic structure, so that that it appears unsuitable for being mechanically fitted to the bumper of the vehicle and for being contemporarily, i.e. during the same mechanical fitting operation, even electronically connected to the means provided for receiving and transmitting the signal penetrated by the detector to an internal control unit of the vehicle.

Other embodiments, however limited to propose solution for the mechanical connection between an obstacle detector and the body of a vehicle, are disclosed by patent documents EP 1 083 099 A and US 6,203,366 B1.

The aim of the present invention is to eliminate the above-mentioned drawbacks of the known art, by providing a unit for sensing obstacles in the vicinity of vehicles that allows to simplify and facilitate the task of the operator assigned to assembly and also reduces considerably the time required to perform the corresponding operations, allowing to increase the production capacity of the workforce and to reduce its cost.

Within this aim, an object of the present invention is to provide a unit that is simple, relatively easy to provide in practice, safe in use, effective in operation, and has a relatively low cost.

This aim and this and other objects that will become better apparent hereinafter are achieved by the present unit for sensing obstacles in the vicinity of vehicles according to the invention, comprising at least one support, which can be associated with the body of a vehicle and is adapted to support at least one obstacle sensing device, which in turn can be connected to a processing unit by way of the interposition of electronic transmission means, and further comprising all the other features recited by the main independent claim.

Further characteristics and advantages of the present invention will become better apparent from the following detailed description of a preferred but not exclusive embodiment of a unit for sensing obstacles in the vicinity of vehicles, illustrated by way of non-limiting example in the accompanying drawings, wherein:
Figure 1 is a perspective view of a possible embodiment of the unit according to the invention;
Figure 2 is a partial perspective view of the unit of Figure 1;
Figure 3 is a partially cutout perspective view of the sensing device of the unit of Figure 1;
Figure 4 is a perspective view, taken from another angle, of the device of Figure 3;
Figure 5 is a partial perspective view of an alternative embodiment of the unit according to the invention.

With reference to the figures, the reference numeral 1 generally designates a unit for sensing obstacles in the vicinity of vehicles.

The unit 1 is provided with a plurality of supports 2 for corresponding sensing devices 3, used to identify and locate obstacles and objects located outside a vehicle.

In particular, the supports 2 are associated with the vehicle body; preferably, they can be distributed along the front or rear bumper of a car, but alternative embodiments of the present invention, in which said supports are located differently, are not excluded.

The bumper of the vehicle is not shown in the figures because it is of a conventional type.

Each support 2 has a plate 4, which can be associated with the internal surface of the bumper detachably, for example by interposing anchoring means of the snap-action type, of the threaded type, or the like, or permanently, by way of gluing, welding or other processes.

As an alternative, the supports 2 can be built into the bumper and constitute a single body therewith; in this embodiment of the invention, the plate 4 of each support 2 is formed by at least one portion of said bumper.

Each device 3 has a substantially cylindrical portion 5, at the base surface of which obstacle sensing means 6 are provided.

Conveniently, the means 6 are constituted by sensors, transducers, microcameras, or the like, particularly by an ultrasonic sensor.

Advantageously, on the bumper of the vehicle there are a plurality of first circular through openings, and each plate 4 is provided with a second likewise circular through opening 7, which is suitable to be arranged so as to substantially mate with one of the first openings in order to allow to insert the portion 5 of the corresponding device 3 in an assembly configuration, in which the sensor 6 is arranged so that it faces outward.

To facilitate the arrangement of the devices 3 with respect to the second openings 7, each support 2 is provided with a hollow cylinder 8, which protrudes at right angles to the plate 4 around the corresponding second opening 7 and from which two tabs 8a protrude axially; the dimensions of the hollow cylinder are such as to allow the snug insertion of the portion 5.

The devices 3 can be connected to a central processing unit, such as the control unit of the vehicle, which is not shown in the figures because it is of a conventional type, by way of electronic transmission means, such as conducting cables 9.

According to the invention, each one of the supports 2 is provided with electronic connection means 10, by way of which it is possible to connect the corresponding device 3 to the conducting cables 9.

Conveniently, such connection means comprise a circuit 11, which is associated with the conducting cables 9 and is suitable, in the assembly configuration, to be arranged so that it is connected to a connection port P with which the device 3 is equipped in order to transmit the output signal and/or be supplied with power.

Advantageously, the connection port P and the portion 5 of each device 3 are both oriented toward the plate 4; each device 3 is in fact provided with a tubular portion 12, which is laterally associated parallel to the portion 5, is open at the end that is adjacent to the sensor 6, and contains a cavity 13 onto which the connection port P opens.

In practice, such tubular portion allows the connection means 10 of each support 2 to access the connection port P, so that the insertion of the device 3 in the respective hollow cylinder 8 is suitable to couple the port to the corresponding circuit 11 and from there to the conducting cables 9 and to the central unit.

The connection means 10 of each support 2 comprise an elongated body 14, which protrudes from the surface of the plate 4 that lies opposite the bumper substantially at right angles to said plate.

The distance between the body 14 and the hollow cylinder 8 of each support 2 is substantially equal to the distance between the portion 5 and the tubular portion 12 of the respective device 3, so that in the assembly configuration the body 14 is inserted in the cavity 13 until it reaches the connection port P.

The unit 1 according to the invention further comprises, for each one of the devices 3, a conventional electronic board S for processing the signal acquired by the corresponding sensor 6; the board is interposed between said sensor and the circuit 11.

In practice, the boards are designed to convert the analog signal that arrives from the sensors 6 into a digital signal suitable to be transmitted to the central unit and/or to supply said sensors with the power supply current required for their operation, as is known in the background art.

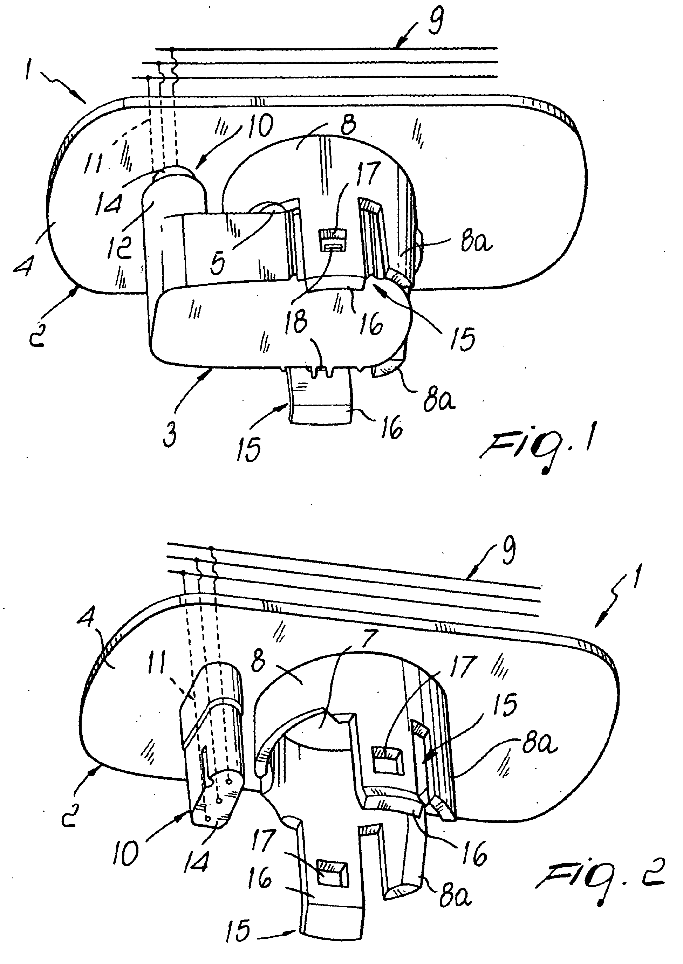

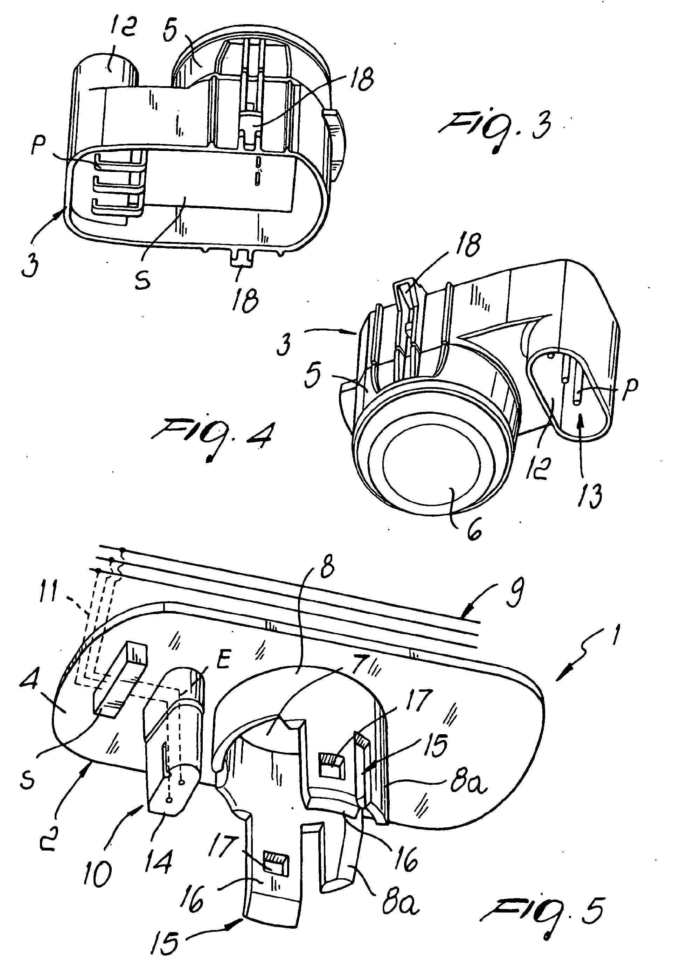

According to the present invention, the electronic boards S can be arranged inside and/or outside the devices 3; Figures 1 to 4, for example, illustrate a first embodiment of the unit 1, in which they are accommodated inside the devices 3 and are interposed between the sensors 6 and the corresponding connection ports P.

In this embodiment, each circuit 11 of the connection means 10 is formed inside the body 14, and when the corresponding device 3 is positioned in the assembly configuration it can be placed in direct contact with the connection port P.

In a second embodiment of the unit 1, shown in Figure 5, the electronic boards S are external to the devices 3 and are arranged on the supports 2 so as to connect, in the assembly configuration, the connection ports P of the devices 3 to the corresponding circuits 11.

In greater detail, in this second embodiment the electronic boards S are interposed between the circuit 11 and an electrical connection E, which is formed inside the body 14 and is designed to be placed in contact with the connection ports P, which in practice are adapted to transmit the signal acquired by the sensors 6 and the power supply current that arrives from the electronic boards S.

The most suitable choice among the illustrated embodiments is performed according to construction parameters to be assessed in each case, such as for example the overall dimensions of the unit 1.

Conveniently, in the assembled configuration, the devices 3 are rigidly associated with the supports 2 by way of temporary fixing means 15.

In the embodiment of the unit 1 shown in the figures, the fixing means 15 are of the snap-acting type and comprise two elastic wings 16, which protrude from each hollow cylinder 8 substantially at right angles to the plate 4 and are provided with a respective transverse hole 17, suitable to be engaged by a corresponding retention tooth 18 formed on the lateral surface of the device 3.

Preferably, the conducting cables 9 are rigidly fixed to the bumper, for example during its production; moreover, at one of their ends they are associated with the circuit 11 of each support 2, and at their other end they are wired together so as to provide a single output to be connected to the control unit of the vehicle.

In practice it has been found that the described invention achieves the proposed aim and object, and in particular the fact is stressed that it allows to reduce the time required to fit the devices to the bumper and consequently also reduces the associated labor costs.

It is in fact noted that the particular embodiment of the sensing device according to the invention, in which the connection port and the portion designed to locate the obstacles are oriented in the same direction, allows to fit each device to the bumper and to connect it to the conducting cables by performing a single operation; moreover, the connection of all the devices to the control unit by means of a single coupling of said cables to said control unit is particularly straightforward and simple.

The invention thus conceived is susceptible of numerous modifications and variations, all of which are within the scope of the appended claims.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A unit (1) for sensing obstacles in the vicinity of vehicles, comprising :
at least one support (2), which can be associated with the body of a vehicle, and
at least one obstacle sensing device (3), which can be connected to a processing unit of the vehicle by way of the interposition of electronic transmission means (9),
wherein said support (2) includes :
at least one plate (4) having a through opening (7); and
electronic connection means (10, 11) for the electronic connection of said sensing device (3) to said electronic transmission means (9), said electronic connection means (10, 11) comprising at least one elongated body (14) which protrudes from the surface of said plate (4)
wherein said obstacle sensing device (3) is provided for being assembled on said support (2), once associated with said body of the vehicle, and includes:
a first portion (5) provided with obstacle sensing means (6) for sensing an obstacle; and
a second tubular portion (12) which is laterally accociated parallel to the first portion (5) and provided with a connection port (P), and
wherein, when said obstacle sensing device (3) is assembled on said support (2), said first portion (5) and said second portion (12) of said sensing device (3) cooperate respectively with the through opening (7) and with the elongated body (14) of said plate (4), so as to insert said sensing means (6), faced outward, in said through openings (7) and to connect said connection port (P) with said electronic connection means (10, 11) of said support (2),
whereby said sensing device (3) is fitted to said body of the vehicle and electronically connected to said transmission means (9), and hence to said processing unit of the same vehicle, by performing a single operation.

2. The unit according to claim 1, wherein said support (2) is associable with the bumper of said vehicle.

3. The unit according to claim 2, wherein said at least one plate (4), is associable with the internal surface of said bumper.

4. The unit according to claim 3, wherein said bumper is provided with a respective through opening, the openings (7) of said bumper and of said plate (4), once associated with said bumper, being arranged so as to substantially mate, so as to allow the insertion of said sensing device in the assembly configuration, in which said sensing device (3) faces outward with said obstacle sensing means (6).

5. The unit according to claim 1, wherein said sensing means (6) are of the type of sensors, transducers, microcameras or the like.

6. The unit according to one or more of the preceding claims, wherein said sensing means (6) comprise at least one ultrasonic sensor.

7. The unit according to one or more of the preceding claims, wherein said electronic connection means (10) comprise an electronic circuit (11), which is associable with said transmission means (9) and is adapted, in the assembly configuration with said obstacle sensing device (3) assembled on said support (2), to be connected to a the connection port (P) of said sensing device (3).

8. The unit according claim 7, wherein said second tubular portion (12) with said connection port (P) and said first portion (5) of the sensing device are both oriented towards said plate (4), the insertion of said sensing device (3) in the opening (7) of said plate (4) being adapted to connect said connection port (P) to said electronic circuit (11).

9. The unit according to one or more of the preceding claims, wherein the plate (4) of said support (2) further comprises a protruding hollow body (8) formed around said through opening (7), and wherein, in the assembly configuration, said elongated body is inserted in a cavity (13) formed in said sensing device (3) at said connection port (P), and said first portion (5) of said sensing device (3) provided with said obstacle sensing means (6) is inserted into said hollow body (8).

10. The unit according to one or more of the preceding claims, wherein it comprises at least one electronic board (S) for processing a signal acquired by said sensing means (6) and said electronic connection means (10) comprise an electronic circuit (11), said board (S) being interposed between said sensing means (6) and said circuit (11).

11. The unit according to claim 10, wherein said electronic board (S) is accommodated inside said sensing device (3) and is interposed between said sensing means (6) and said connection port (P).

12. The unit according to claim 10, wherein said board (S) is external to said sensing device (3) and is interposed between said connection port (P) and said circuit (11) in the assembly configuration with said obstacle sensing device (3) assembled on said support (2).

13. The unit according to claim 10, wherein said circuit (11) is provided inside said elongated body (14).

14. The unit according to one or more of the preceding claims, wherein it comprises fixing means (15, 16, 17, 18) for fixing said sensing device (3) to said support (2).

15. The unit according to claim 14, wherein said fixing means (15) are of the temporary type.

16. The unit according to claims 14 or 15, wherein said fixing means (15) are of the snap-acting type (16, 17, 18).

17. The unit according to claim 16, wherein said fixing means (15) comprise at least one elastic wing (16) that protrudes from said plate (4) and is provided with at least one respective hole (17) that is adapted to be engaged by a corresponding retention tooth (18) that is provided on said sensing device (3).

18. The unit according to one or more of the preceding claims, wherein said support (2) is associable with said vehicle's body by interposing anchoring means.

19. The unit according to claim 18, wherein said anchoring means are of the snap-acting type or of the threaded type.

20. The unit according to one or more of the preceding claims, wherein said support (2) is associable with the vehicle's bumper by gluing or welding.

21. The unit according to one or more of the preceding claims, wherein said support (2) is built into the bumper of the vehicle so as to constitute a single body with it, said plate (4) being formed by at least one portion of said bumper.

22. The unit (1) according to one or more of the preceding claims, in combination with a vehicle's bumper, once the support (2) of the same unit is associated with said bumper, wherein said transmission means (9) are rigidly fixed to said bumper, in particular during its production.

23. The unit according to one or more of the preceding claims, wherein it comprises a plurality of said sensing devices (3).

24. The unit according to one or more of the preceding claims, once fitted to and in combination with the body of said vehicle, wherein said electronic transmission means (6) comprise a plurality of conducting cables, which are associated at one end with said electronic connection means (10, 11) provided in said support (2) for electronically connecting said sensing device (3) and which are wired together at the other end for being connected to said processing unit of the vehicle.

## Patentansprüche

1. Einheit (1) zum Erkennen von Hindernissen in der Umgebung von Fahrzeugen mit:
mindestens einem Träger (2), der mit der Karosserie eines Fahrzeugs verbunden werden kann, und
mindestens einer hinderniserfassenden Sensorvorrichtung (3), die mithilfe von dazwischen angeordneten, elektronischen Übertragungsmitteln (9) zu einer Prozessoreinheit verbunden werden kann,
wobei der Träger (2) folgendes umfasst :
mindestens eine platte (4) mit einer Durchgangsöffnung (7) und
elektronischen Anschlussmitteln (10, 11) für die elektronische Verbindung der Sensorvorrichtung (3) mit den elektronischen Übertragungsmitteln (9);
wobei die elektronischen Anschlussmittel (10, 11) mindestens ein längliches Gehäuse (14) aufweisen, welches von der Oberfläche der Platte (4) absteht,
wobei die hinderniserfassende Sensorvorrichtung (3) so bereitgestellt wird, dass sie auf dem Träger (2) aufgesetzt werden kann, sobald dieser mit der Karosserie des Fahrzeugs verbunden worden ist, und welche folgendes umfasst:
einen ersten Abschnitt (5), der mit hinderniserfassenden Sensormitteln (6) zum Aufspüren eines Hindernisses versehen ist; und
einem zweiten röhrenförmigen Abschnitt (12), der zum ersten Abschnitt (5) seitlich parallel mit einem Verbindungsport (P) angeordnet ist; und
wobei, wenn die hinderniserfassende Sensorvorrichtung (3) auf dem Träger (2) aufgesetzt worden ist, der erste Abschnitt (5) und der zweite Abschnitt (12) der Sensorvorrichtung (3) jeweils mit der Durchgangsöffnung (7) und mit dem länglichen Gehäuse (14) der Platte (4) zusammenwirken, um so die Sensormittel (6) - nach außen weisend - in die Durchgangsöffnung (7) einzuführen, und um den Verbindungsport (P) mit den elektronischen Anschlussmitteln (10, 11) des Trägers (2) zu verbinden,
wodurch die Sensorvorrichtung (3) in die Karosserie des Fahrzeugs eingepasst und mit den Übertragungsmitteln (9) elektronisch verbunden wird, und folglich mit der Prozessoreinheit desselben Fahrzeugs, wobei nur ein einziger Betriebsvorgang ausgeführt werden muss.

2. Einheit gemäß Anspruch 1 **gekennzeichnet dadurch, dass** der Träger (2) mit der Stoßstange des Fahrzeugs verbunden ist.

3. Einheit gemäß Anspruch 2, **gekennzeichnet dadurch, dass** mindestens eine Platte (4) mit der Innenfläche der Stoßstange verbunden ist.

4. Einheit gemäß Anspruch 3, **gekennzeichnet dadurch, dass** die Stoßstange mit einer entsprechenden Durchgangsöffnung versehen ist, wobei die Öffnungen (7) in der Stoßstange und jene in der Platte (4) - sobald sie mit der Stoßstange verbunden worden ist - ausgerichtet werden, um im Wesentlichen ein Eingriffsteil zu bilden, damit das Einsetzen der Sensorvorrichtung in den Montagebausatz ermöglicht wird,
wobei dann die Sensorvorrichtung (3) mit den hinderniserfassenden Sensormitteln (6) nach außen weist.

5. Einheit gemäß Anspruch 1, **gekennzeichnet dadurch, dass** die Sensormittel (6) aus dem Typ Sensoren, Messwandler, Mikrokameras oder dergleichen sind.

6. Einheit gemäß einem, oder mehreren der vorhergehenden Ansprüche, **gekennzeichnet dadurch, dass** die Sensormittel (6) mindestens einen Ultraschallsensor aufweisen.

7. Einheit gemäß einem oder mehreren der vorhergehenden Ansprüche, **gekennzeichnet dadurch, dass** die elektronischen Anschlussmittel (10) eine elektronische Schaltung (11) aufweisen, welche mit den Übertragungsmitteln (9) verbunden und so ausgelegt wird, dass sie im Montagebausatz mit der hinderniserfassenden Sensorvorrichtung (3), die auf dem Träger (2) aufgesetzt wurde, mit dem Verbindungsport (P) der Sensorvorrichtung (3) angeschlossen wird.

8. Einheit gemäß Anspruch 7, **gekennzeichnet dadurch, dass** sich der zweite röhrenförmige Abschnitt (12) mit dem Verbindungsport (P) und der erste Abschnitt (5) der Sensorvorrichtung beide in die Richtung zur Platte (4) hin orientieren, wobei das Einsetzen der Sensorvorrichtung (3) in die Öffnung (7) der Platte (4) so konzipiert ist, dass der Verbindungsport (P) mit der elektronischen Schaltung (11) angeschlossen wird.

9. Einheit gemäß einem oder mehreren der vorhergehenden Ansprüche, **gekennzeichnet dadurch, dass** die Platte (4) des Trägers (2) ferner einen abstehenden Hohlkörper (8) aufweist, der sich um die Durchgangsöffnung (7) formt, und **gekennzeichnet dadurch, dass** - während des Montagezusammenbaus - das längliche Gehäuse in einen Hohlraum (13) eingeführt wird, der in der Sensorvorrichtung (3) am Verbindungsport (P) ausgebildet ist, und dass der erste Abschnitt (5) der Sensorvorrichtung (3), der mit den hinderniserfassenden Sensormitteln (6) versehen ist, in diesen Hohlkörper (8) eingeführt wird.

10. Einheit gemäß einem oder mehreren der vorhergehenden Ansprüche, **gekennzeichnet dadurch, dass** sie mindestens eine Elektroniklelterplatine (S) zum Verarbeiten eines Signals aufweist, das vom Sensormittel (6) erfasst wurde, und dass die elektronischen Anschlussmittel (10) eine elektronische Schaltung (11) aufweisen, wobei sich die Leiterplatine (S) zwischen dem Sensormittel (6) und der Schaltung (11) befindet.

11. Einheit gemäß Anspruch 10, **gekennzeichnet dadurch, dass** die elektronische Leiterplatine (S) im Innern der Sensorvorrichtung (3) aufgenommen ist und sich zwischen dem Sensormittel (6) und dem Verbindungsport (P) befindet.

12. Einheit gemäß Anspruch 10, **gekennzeichnet dadurch, dass** die elektronische Leiterplatine (S) außerhalb der Sensorvorrichtung (3) angeordnet ist und sich zwischen dem Verbindungsport (P) und der Schaltung (11) in dem Montagebausatz mit der hinderniserfassenden Sensorvorrichtung (3), die auf dem Träger (2) aufgesetzt ist, befindet.

13. Einheit gemäß Anspruch 10, **gekennzeichnet dadurch, dass** die Schaltung (11) im Innern des länglichen Gehäuses (14) aufgenommen ist.

14. Einheit gemäß einem oder mehreren der vorhergehenden Ansprüche, **gekennzeichnet dadurch, dass** sie Befestigungsmittel (15, 16, 17 und 18) zum Befestigen der Sensorvorrichtung (3) mit dem Träger (2) aufweist.

15. Einheit gemäß Anspruch 14, **gekennzeichnet dadurch, dass** die Befestigungsmittel (15) temporär ausgelegt sind.

16. Einheit gemäß Anspruch 14 oder 15, **gekennzeichnet dadurch, dass** die Befestigungsmittel (15) aus einem Einrasttyp bestehen.

17. Einheit gemäß Anspruch 16, **gekennzeichnet dadurch, dass** die Befestigungsmittel (15) mindestens einen flexiblen Flügel (16) aufweisen, der von der Platte (4) absteht, und der mit mindestens einer entsprechenden Öffnung (17) versehen ist, die zum Eingriff mit einem korrespondierenden Rückhaltezahn (18) ausgelegt ist, welcher auf der Sensorvorrichtung (3) angeordnet ist.

18. Einheit gemäß einem oder mehreren der vorhergehenden Ansprüche, **gekennzeichnet dadurch, dass** der Träger (2) mithilfe von dazwischen befindlichen Verankerungsvorrichtungen mit der Karosserie des Fahrzeugs verbunden wird.

19. Einheit gemäß Anspruch 18, **gekennzeichnet dadurch, dass** die Verankerungsvorrichtungen aus einem Einrasttyp oder Verschraubungstyp bestehen.

20. Einheit gemäß einem oder mehreren der vorhergehenden Ansprüche, **gekennzeichnet dadurch, dass** der Träger (2) durch ein Ankleb- oder Anschweißverfahren mit der Fahrzeugstoßstange verbunden werden kann.

21. Einheit gemäß einem oder mehreren der vorhergehenden Ansprüche, **gekennzeichnet dadurch, dass** der Träger (2) in die Stoßstange des Fahrzeugs so eingebaut ist, dass er mit dieser einen einzigen Körper bildet, wobei die Platte (4) mit mindestens einem Abschnitt der Stoßstange bereitgestellt wird.

22. Einheit (1) gemäß einem oder mehreren der vorhergehenden Ansprüche, wobei sie sobald - in der Fahrzeugstoßstangenkombination - der Träger (2) derselbigen Einheit mit der Stoßstange verbunden ist, **gekennzeichnet dadurch ist, dass** die Übertragungsmittel (9) mit der Stoßstange starr fixiert sind, insbesondere während deren Produktion.

23. Einheit gemäß einem oder mehreren der vorhergehenden Ansprüche, **gekennzeichnet dadurch, dass** diese eine Mehrzahl von Sensorvorrichtungen (3) aufweist.

24. Einheit gemäß einem oder mehreren der vorhergehenden Ansprüche, wobei sie - sobald sie aufgesetzt und in Kombination in die Karosserie des Fahrzeugs eingebaut ist, **dadurch gekennzeichnet ist, dass** die elektronischen Übertragungsmitteln (9) eine Vielzahl von Kabelleitungen aufweisen, welche an einem Ende mit den elektronischen Anschlussmitteln (10, 11) verbunden werden, die im Träger (2) für ein elektronisches Verbinden der Sensorvorrichtung (3) bereitgestellt sind, und welche an dem anderen Ende für eine Verbindung zur Prozessoreinheit des Fahrzeugs miteinander festverdrahtet werden.

## Revendications

1. Unité (1) pour la détection d'obstacles au voisinage de véhicules, comprenant :
au moins un support (2) qui peut être associé à la carrosserie d'un véhicule, et
au moins un dispositif (3) de détection d'obstacles, qui peut être relié à une unité centrale de traitement du véhicule par l'intermédiaire de moyens de transmission électronique (9),
dans laquelle ledit support (2) comprend ;
au moins une plaque (4) percée d'une ouverture traversante (7) ; et des moyens de connexion électronique (10, 11) pour la connexion électronique dudit dispositif de détection (3) auxdits moyens de transmission électronique (9), lesdits moyens de connexion électronique (10, 11) comprenant au moins un corps allongé (14) qui fait saillie de la surface de ladite plaque (4),
dans laquelle ledit dispositif (3) de détection d'obstacles est prévu pour être assemblé sur ledit support (2) une fois associé à ladite carrosserie du véhicule, et comprend :
une première portion (5) équipée de moyens (6) de détection d'obstacles destinés à détecter un obstacle ; et
une deuxième portion tubulaire (12) qui est latéralement associée de manière parallèle à la première portion (5) avec un point de connexion (P), et
dans laquelle, lorsque ledit dispositif (3) de détection d'obstacles est assemblé sur ledit support (2), ladite première portion (5) et ladite deuxième portion (12) dudit dispositif (3) de détection coopèrent respectivement avec l'ouverture traversante (7) et avec le corps allongé (14) de ladite plaque (4), de manière à insérer lesdits moyens (6) de détection, orientés vers l'extérieur, dans ladite ouverture traversante (7) et à raccorder ledit point de connexion (P) avec lesdits moyens de connexion électronique (10, 11) dudit support (2),
ce qui fait que ledit dispositif (3) de détection est fixé à ladite carrosserie du véhicule et raccordé électroniquement auxdits moyens de transmission (9), et donc à ladite unité centrale de traitement de ce même véhicule, en effectuant une seule opération.

2. Unité selon la revendication 1, dans laquelle ledit support (2) est associable au pare-chocs dudit véhicule.

3. Unité selon la revendication 2, dans laquelle ladite au moins une plaque (4) est associable à la surface interne dudit pare-chocs.

4. Unité selon la revendication 3, dans laquelle ledit pare-chocs est muni d'une ouverture traversante respective, les ouvertures (7) dudit pare-chocs et de ladite plaque (4) une fois associée audit pare-chocs, étant disposées de manière à être essentiellement en correspondance, afin de permettre l'insertion dudit dispositif de détection dans la configuration d'assemblage, dans laquelle ledit dispositif détecteur (3) fait face à l'extérieur avec lesdits moyens (6) de détection d'obstacles.

5. Unité selon la revendication 1, dans laquelle lesdits moyens de détection (6) sont du type capteurs, transducteurs, microcaméras ou éléments similaires.

6. Unité selon l'une ou plusieurs des revendications précédentes, dans laquelle lesdits moyens de détection (6) comprennent au moins un capteur ultrasonore.

7. Unité selon l'une ou plusieurs des revendications précédentes, dans laquelle lesdits moyens de connexion électronique (10) comprennent un circuit électronique (11), qui est associable auxdits moyens de transmission (9) et est adapté, dans la configuration d'assemblage avec ledit dispositif (3) de détection d'obstacles assemblé sur ledit support (2), à être raccordé au point de connexion (P) dudit dispositif de détection (3).

8. Unité selon la revendication 7, dans laquelle ladite deuxième portion tubulaire (12) avec ledit point de connexion (P) et ladite première portion (5) du dispositif de détection sont toutes les deux orientées vers ladite plaque (4), l'insertion dudit dispositif de détection (3) dans l'ouverture (7) de ladite plaque (4) étant propre à raccorder ledit point de connexion (P) audit circuit électronique (11).

9. Unité selon l'une ou plusieurs des revendications précédentes, dans laquelle la plaque (4) dudit support (2) comprend additionnellement un corps creux saillant (8) formé autour de ladite ouverture traversante (7), et dans laquelle, dans la configuration d'assemblage, ledit corps allongé est inséré dans une cavité (13) formée dans ledit dispositif de détection (3) audit point de connexion (P), et ladite première portion (5) dudit dispositif de détection (3) équipée desdits moyens (6) de détection d'obstacles est insérée dans ledit corps creux (8).

10. Unité selon l'une ou plusieurs des revendications précédentes, dans laquelle est comprise au moins une carte électronique (S) destinée au traitement d'un signal acquis par lesdits moyens de détection (6), et dans laquelle lesdits moyens de connexion électronique (10) comprennent un circuit électronique (11), ladite carte (S) étant interposée entre lesdits moyens de détection (6) et ledit circuit (11).

11. Unité selon la revendication 10, dans laquelle ladite carte électronique (S) est logée à l'intérieur dudit dispositif de détection (3) et est interposée entre lesdits moyens de détection (6) et ledit point de connexion (P).

12. Unité selon la revendication 10, dans laquelle ladite carte (S) est extérieure audit dispositif de détection (3) et est interposée entre ledit point de connexion (P) et ledit circuit (11) dans la configuration d'assemblage avec ledit dispositif (3) de détection d'obstacles assemblé sur ledit support (2).

13. Unité selon la revendication 10, dans laquelle ledit circuit (11) est placé à l'intérieur dudit corps allongé (14).

14. Unité selon l'une ou plusieurs des revendications précédentes, dans laquelle sont compris des moyens de fixation (15, 16, 17, 18) pour fixer ledit moyen de détection (3) audit support (2).

15. Unité selon la revendication 14, dans laquelle lesdits moyens de fixation (15) sont de type temporaire.

16. Unité selon les revendications 14 ou 15, dans laquelle lesdits moyens de fixation (15) sont de type à action rapide (16, 17, 18).

17. Unité selon la revendication 16, dans laquelle lesdits moyens de fixation (15) comprennent au moins une aile élastique (16) qui fait saillie de ladite plaque (4) et comporte au moins un trou respectif (17) qui est propre à être engagé par une dent de retenue correspondante (18) qui est prévue sur ledit dispositif de détection (3).

18. Unité selon l'une ou plusieurs des revendications précédentes, dans laquelle ledit support (2) est associable à ladite carrosserie du véhicule par interposition de moyens d'ancrage.

19. Unité selon la revendication 18, dans laquelle lesdits moyens d'ancrage sont du type à action rapide ou du type fileté.

20. Unité selon l'une ou plusieurs des revendications précédentes, dans laquelle ledit support (2) est associable au pare-chocs du véhicule par collage ou soudage.

21. Unité selon l'une ou plusieurs des revendications précédentes, dans laquelle ledit support (2) est incorporé dans le pare-chocs du véhicule afin de constituer un corps unique avec celui-ci, ladite plaque (4) étant formée par une portion au moins dudit pare-chocs.

22. Unité (1) selon l'une ou plusieurs des revendications précédentes, en combinaison avec un pare-chocs de véhicule, une fois que le support (2) de cette même unité est associé audit pare-chocs, dans laquelle lesdits moyens de transmission (9) sont fixés de manière rigide audit pare-chocs, en particulier pendant sa fabrication.

23. Unité selon l'une ou plusieurs des revendications précédentes, comprenant une pluralité desdits dispositifs de détection (3).

24. Unité selon l'une ou plusieurs des revendications précédentes, une fois fixée à la carrosserie dudit véhicule et en combinaison avec celle-ci, dans laquelle lesdits moyens de transmission électronique (6) comprennent une pluralité de câbles conducteurs qui sont associés sur une extrémité auxdits moyens de connexion électronique (10, 11) prévus dans ledit support (2) pour raccorder électroniquement ledit dispositif de détection (3) et qui sont câblés ensemble à l'autre extrémité pour être raccordés à ladite unité de traitement central du véhicule.
